# EUROPEAN PATENT SPECIFICATION

(11) **EP 4 363 170 B1**
(45) Date of publication and mention of the grant of the patent: **31.07.2024**
(21) Application number: 23732987.5
(22) Date of filing: 19.06.2023
(51) Int. Cl.: B25J 9/00, B25J 19/00

(54) **INTEGRATED CONTROL UNIT**
INTEGRIERTE STEUEREINHEIT
UNITÉ DE COMMANDE INTÉGRÉE

(30) Priority: 14.09.2022 EP 22195568
(43) Date of publication of application: 08.05.2024
(60) Divisional application: 24183401.9
(73) Proprietor: Kassow Robots ApS, 2770 Kastrup (DK)
(72) Inventor: KASSOW, Kristian, 2300 Copenhagen S (DK)
(74) Representative: COPA Copenhagen Patents
(86) International application number: PCT/EP2023/066421
(87) International publication number: WO 2024/056220

(56) References cited:
- CN-A- 102 729 259
- US-A1- 2022 143 848
- US-B2- 10 953 537
- US-B2- 11 154 984
- US-B2- 9 597 794

## Description

The present disclosure relates to a robot, e.g. a robotic arm and/or a control unit for such robot or robotic arm. More particularly the present disclosure relates to a control unit for being integrated with the robot.

### BACKGROUND

Robots and in particular robotic arms are widely used to perform a wide variety of automated tasks. Recently lightweight robots have increased in popularity for assisting human activities, e.g. in production facilities. These robots are commonly known as collaborative robots or cobots.

For robots, such as robotic arms, it is desirous to enhance flexibility and facilitate more compact robot solutions.

Furthermore, as control of robots may require extensive computational calculations substantial heat may be generated by robot electronics. Furthermore, it is desirous to increase the amount of payload a certain robot is able to handle, which further adds to the robot generating more heat. Hence, enhanced solutions for handling such heat generated by the robot are sought.

US 10,953,537 B2 discloses a robot including a base, a robot arm including a first arm provided on the base and rotating around a first rotation axis, a first motor provided in the first arm and configured to rotate the first arm, a control board provided on an inside of the base and configured to control driving of the robot arm, and a power supply board provided on the inside of the base and configured to supply electric power to the control board.

CN 102 729 259 A discloses a robot provided with a motor, which makes a rotary shaft rotate relative to a base, and a driving circuit substrate of a driving circuit of a resolver detecting the rotation angle of the motor. Under the condition that the installing face of the driving circuit substrate contacts with the base face, the driving circuit substrate can move relative to the robot base via an elastic part which is clamped by the driving circuit substrate and the base and has the thermal conductivity.

US 9,597,794 B2 discloses a robot including a base part having a first cavity part inside, a torso part coupled to the base part, at least one arm unit provided on the torso part, and an inner box provided in the first cavity part and having a second cavity part opening in an upper portion. A circuit board for driving an actuator that operates the arm unit is provided on an outer side surface of the inner box.

US 2022/143848 A1 discloses multi-path cooling arrangements for robotic systems. For example, a robotic system including a heatgenerating component positioned within a base that supports one or more articulating links. The heat-generating component can be supported on a thermally conductive bracket within the base. The robotic system can include a first thermally conductive path configured to dissipate heat from the heat generating component. The first thermally conductive path can include the bracket and a first heatsink connected to the bracket.

US 11,154,984 B2 discloses a robot mechanism including a base, a main body, a motor, a driver, a bottom plate, a flexible heat conductive member, and a controller. The main body is connected to the base and has a housing. The motor and the driver are disposed in the main body, and the driver is electrically connected to the motor. The bottom plate is disposed on the housing and situated between the driver and the housing, and a gap is formed between the bottom plate and the driver. The flexible heat conductive member is disposed between the driver and the housing. The flexible heat conductive member contacts the driver. The controller is detachably disposed in the base.

### SUMMARY

It is an object of the present disclosure to at least provide improvements of the prior art and/or to solve or reduce problems known from the prior art. It is a further object of the present disclosure to provide an advantageous or at least alternative robot, robotic assembly, and/or components thereof. Thus, the present disclosure relates to a control unit for a robot and a robot comprising such control unit.

Accordingly, a control unit for a robot is disclosed. The control unit is adapted to be arranged between a base of the robot and a structure to which the robot is to be fastened. The structure may be a factory floor or another structure from which the robot is meant to work from.

Also, a robot is disclosed. The robot comprises the control unit arranged below a base of the robot, such as to be positioned between the base of the robot and a structure to which the robot is to be fastened, e.g. a factory floor or another structure from which the robot is meant to work from. For example, the control unit may be arranged between the base of the robot and the structure to which the robot is to be fastened.

The control unit comprises a bottom plate and optionally a sidewall. The sidewall may be one integrally formed sidewall. Alternatively, the sidewall may be made up of a plurality of sidewall parts. The bottom plate is adapted to abut the structure, such as to facilitate heat transfer between the control unit and the structure. The bottom plate and optionally the sidewall forming an inner surface of the control unit. The control unit may comprise a control unit housing. The control unit housing is formed by the bottom plate and the sidewall. The inner surface may be an inner surface of the control unit housing.

The sidewall may be integrally formed with the bottom plate. e.g. the sidewall and the bottom plate may be cast in one piece and/or may be machined from a single block of material. Integrally forming the sidewall and the bottom plate may facilitate enhanced heat transmission between the sidewall and bottom plate.

The bottom plate and/or the sidewall, may be made of a material with a thermal conductivity at room temperature of at least 100 W/(m·K), such as at least 200 W/(m·K).

The bottom plate and/or the sidewall, may be made of aluminium. Alternatively, the bottom plate and/or the sidewall, may be made of other materials, such as copper. Alternatively, the bottom plate and/or the sidewall, may be made of alloys of different materials, e.g. comprising aluminium and/or copper, may be used for the bottom plate and/or the sidewall.

The control unit comprises a control circuit. The control circuit comprises a processing unit.

The processing unit has a heat dissipating surface. The control circuit may be arranged in the control unit housing. The control circuit is arranged with the heat dissipating surface of the processing unit abutting (e.g. contacting) the inner surface of the control unit, such as to facilitate heat transfer between the processing unit and the bottom plate and/or the sidewall. For example, the heat dissipating surface of the processing unit may abut (e.g. contact) the bottom plate and/or the sidewall of the control unit. The heat dissipating surface of the processing unit may be abutting and/or contacting the inner surface via a heat transferring element, such as a heat transferring block. The heat transferring element may be made of a material with a thermal conductivity at room temperature of at least 100 W/(m·K), such as at least 200 W/(m·K). For example, the heat transferring element may be made of aluminium, copper or one or more alloys of different materials, e.g. comprising aluminium and/or copper. The heat transferring element may be made of the same material as the bottom plate and/or the sidewall. In some examples, the heat transferring element may form an integral part of the bottom plate and/or the sidewall.

The control unit may comprise an energy consumption unit. The energy consumption unit may serve the purpose of handling excess power on a power bus of the robot and/or from motors of the robot, which may be generated in situations, where a motor of the robot is braking an ongoing motion. The energy consumption unit may comprise one or more resistors. The one or more resistors of the energy consumption unit may be adapted to handle the excess power by converting it to heat. The energy consumption unit may comprise a heat dissipating surface. The heat dissipating surface of the energy consumption unit may be a surface of the one or more resistors of the energy consumption unit. The energy consumption unit may be arranged in the control unit housing. The energy consumption unit may be arranged with the heat dissipating surface of the energy consumption unit abutting (e.g. contacting) the inner surface of the control unit, such as to facilitate heat transfer between the energy consumption unit and the bottom plate and/or the sidewall, such as between the one or more resistors of the energy consumption unit and the bottom plate and/or the sidewall. Like the heat dissipating surface of the processing unit, the heat dissipating surface of the energy consumption unit may be abutting and/or contacting the inner surface via a heat transferring element (which may be the same or a separate heat transferring element than the one described above with respect to the heat dissipating surface of the processing unit), such as a heat transferring block.

The control unit may comprise a power supply unit. The power supply unit may be adapted to power the robot, such as electrical components of the robot, e.g. motors and/or circuitry. The power supply unit may be arranged in the control unit housing. The power supply unit may be arranged with a heat dissipating surface of the power supply unit abutting (e.g. contacting) the inner surface of the control unit, such as to facilitate heat transfer between the power supply unit and the bottom plate and/or the sidewall. Like the heat dissipating surface of the processing unit, the heat dissipating surface of the power supply unit may be abutting and/or contacting the inner surface via a heat transferring element (which may be the same or a separate heat transferring element than the one described above with respect to the heat dissipating surface of the processing unit), such as a heat transferring block.

The control unit may comprise one or more, such as a plurality of, electrical control unit connectors (e.g. sockets or plugs). The one or more or one electrical control unit connectors may include a first electrical control unit connector, a second electrical control unit connector, and/or a third electrical control unit connector. Each of the one or more electrical control unit connectors may comprise respective control unit terminals. The first electrical control unit connector, the second electrical control unit connector, and/or the third electrical control unit connector may be arranged through the sidewall. The first electrical control unit connector, the second electrical control unit connector, and/or the third electrical control unit connector may be adapted to couple with a teach pendant connector of a teach pendant, e.g. for controlling and/or programming the robot. The first electrical control unit connector, the second electrical control unit connector, and/or the third electrical control unit connector may be an ethernet connector or a USB connector. The first electrical control unit connector, the second electrical control unit connector, and/or the third electrical control unit connector may be a power supply connector adapted to receive power for powering the robot.

The robot comprises one or more or a plurality of joint assemblies, e.g. including a first joint assembly and a second joint assembly. The robot further comprises one or more or a plurality of motors, e.g. including a first primary motor, a first secondary motor, a second primary motor, and/or a second secondary motor. The plurality of motors may be at least six motors, such as seven motors.

Each of the plurality of joint assemblies comprises a joint housing and a primary motor connecting the joint housing with a primary link. The primary motor is adapted to rotate the primary link relative to the joint housing around a primary axis. A joint assembly may further comprise a secondary motor connecting the joint housing with a secondary link. The secondary motor may be adapted to rotate the secondary link relative to the joint housing around a secondary axis. The secondary axis may be non-parallel with the primary axis.

The first joint assembly comprises a first joint housing and the first primary motor. The first primary motor connects the first joint housing with a first primary link. The first primary motor is adapted to rotate the first primary link relative to the first joint housing around a first primary axis. The first joint assembly may comprise a first secondary motor. The first secondary motor may connect the first joint housing with a first secondary link. The first secondary motor may be adapted to rotate the first secondary link relative to the first joint housing around a first secondary axis. The first secondary axis may be non-parallel with the first primary axis.

The second joint assembly comprises a second joint housing and the second primary motor. The second primary motor connects the second joint housing with a second primary link. The second primary motor is adapted to rotate the second primary link relative to the second joint housing around a second primary axis. The second joint assembly may comprise the second secondary motor. The second secondary motor may connect the second joint housing with a second secondary link. The second secondary motor may be adapted to rotate the second secondary link relative to the second joint housing around a second secondary axis. The second secondary axis may be non-parallel with the second primary axis.

A primary link in relation to one joint assembly may be a secondary link in relation to another joint assembly. For example, the second primary link and the first secondary link may be the same link. The first primary link may extend between the base of the robot and the first joint assembly. The second primary link and/or the first secondary link may extend between the first joint assembly and the second joint assembly.

The processing unit, such as the processing unit of the control circuit, may be adapted to control operation of the one or more motors, such as the plurality of motors, to effectuate a desired movement of the robot.

The robot may comprise one or more, such as a plurality of, electrical base connectors (e.g. sockets or plugs), which may be arranged at the base of the robot. The one or more electrical base connectors may include a first electrical base connector and/or a second electrical base connector. The first electrical base connector may be a power supply connector adapted to receive power for powering the robot. In such example, the control unit may be powered via the first electrical base connector. The second electrical base connector may be an I/O port.

The control unit may comprise one or more attachment holes. The attachment holes may be through holes, e.g. allowing fastening bolts to extend therethrough. The robot may comprise the fastening bolts. The fastening bolts may extend from the base of the robot, through the attachment holes of the control unit, and to the structure to which the robot is to be fastened. The fastening bolts may be fastened to the structure. The fastening bolts may fasten the base and/or the control unit to the structure. Preferably, the fastening bolts extends from the base, through the attachment holes of the control unit and are fastened to the structure. Thereby, thermal contact between the base and the control unit and between the control unit and the structure may be enhanced, and thermal conductance between the base and the control unit and between the control unit and the structure may be enhanced.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating an exemplary robot,
Fig. 2 is a schematic diagram illustrating an exemplary joint assembly,
Figs. 3 and 4 schematically illustrates an exemplary control unit,
Figs. 5-7 schematically illustrates simplified cross-sectional views of an exemplary control unit, and
Figs. 8A and 8B schematically illustrates an exemplary control unit.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

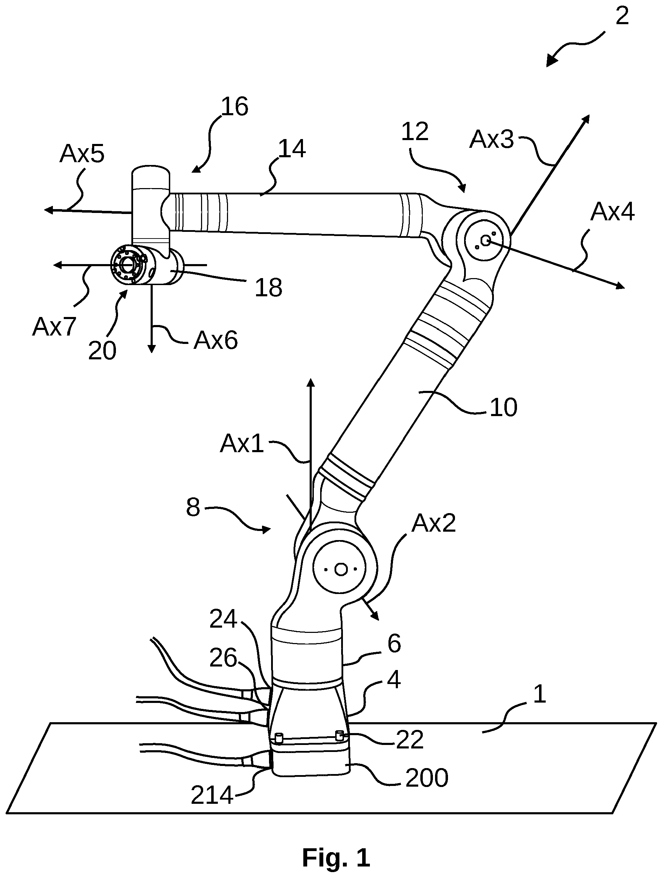

Fig. 1 is a schematic diagram illustrating an exemplary robot 2, which in the present example is a robotic arm, more particularly, a seven-axis robotic arm. In the present example, the robot 2 is fastened to a structure 1, which may be a factory floor or another structure from which the robot 2 is meant to work from. In some examples, the structure 1 may be part of a movable unit, such as a mobile robot or a vehicle, which would allow the robot 2 to be moved between different positions.

The robot 2 comprises a plurality of joint assemblies, including a first joint assembly 8, a second joint assembly 12, a third joint assembly 16, and a fourth joint assembly 20. In other examples, the robot may comprise fewer or more joint assemblies. For example, the robot 2 may, in another configuration, comprise only one joint assembly, such as the first joint assembly 8.

The robot 2 comprises a plurality of links, including a first link 6, a second link 10, a third link 14, and a fourth link 18. The links extends between the joint assemblies. For example, the first link 6 extends between a base 4 of the robot 2 and the first joint assembly 8. The second link 10 extends between the first joint assembly 8 and the second joint assembly 12. The third link 14 extends between the second joint assembly 12 and the third joint assembly 16. The fourth link 18 extends between the third joint assembly 16 and the fourth joint assembly 20.

Each of the joint assemblies 8, 12, 16, 20 are adapted to rotate one or more respective links relative to the joint assembly around an axis. For example, the first joint assembly 8 is adapted to rotate the first link 6 relative to the first joint assembly 8 around a first axis Ax1. The first joint assembly 8 is adapted to rotate the second link 10 relative to the first joint assembly 8 around a second axis Ax2. The second axis Ax2 is non-parallel with the first axis Ax1. The second joint assembly 12 is adapted to rotate the second link 10 relative to the second joint assembly 12 around a third axis Ax3. The second joint assembly 12 is adapted to rotate the third link 14 relative to the second joint assembly 12 around a fourth axis Ax4. The fourth axis Ax4 is non-parallel with the third axis Ax3. The third joint assembly 16 is adapted to rotate the third link 14 relative to the third joint assembly 16 around a fifth axis Ax5. The third joint assembly 16 is adapted to rotate the fourth link 18 relative to the third joint assembly 16 around a sixth axis Ax6. The sixth axis Ax6 is non-parallel with the fifth axis Ax5. The fourth joint assembly 20 is adapted to rotate the fourth link 18 relative to the fourth joint assembly 20 around a seventh axis Ax7. The robot 2 may be put in some configurations where none of the seven axes Ax1-Ax7 are parallel. However, in some other configurations two or more of the seven axes may be parallel.

Although being described in relation to a robot 2 being operable relative to seven axes, the present disclosure may alternatively be applied to a robot having only six axes, or even fewer axes. For example, with respect to the example illustrated in Fig. 1, movement around the third axis Ax3, may be omitted, to obtain a robot operable relative to six axes. In such situation, the first joint assembly 8 may be adapted to rotate the first link 6 relative to the first joint assembly 8 around the first axis Ax1 and to rotate the second link 10 relative to the first joint assembly 8 around the second axis Ax2. The second joint assembly 12 may be adapted to rotate the third link 14 relative to the second joint assembly 12 around the fourth axis Ax4 and to rotate the third link 14 relative to the second joint assembly 12 around the fifth axis Ax5. The third joint assembly 16 may be adapted to rotate the third link 14 relative to the third joint assembly 16 around the sixth axis Ax6 and to rotate the fourth link 18 relative to the third joint assembly 16 around the seventh axis Ax7. The fourth joint assembly 20 may be omitted. Hence, a robot operable relative to six axes may be realised with only three joint assemblies according to the present disclosure.

The robot 2, as illustrated, comprises a control unit 200. The control unit 200 is adapted to be arranged between the base 4 of the robot 2 and the structure 1. The control unit 200 may be provided as an additional unit. Thus, in some examples the base 4 may fastened to the structure 1, such as to fasten the robot 2 to the structure 1, and an external control unit may be provided to control the robot 2. However, as illustrated, the control unit 200 may be arranged between the base 4 and the structure 1. The control unit 200 comprises circuitry, such as one or more processing units, adapted to control operation of the robot 2 to effectuate a desired movement of the robot 2.

The robot 2 may be fastened to the structure 1 by fastening bolts 22. The fastening bolts 22 may extend from the base 4, through attachment holes of the control unit 200, and to the structure 1, thereby fastening both the robot and the control unit 200 to the structure 1. Preferably, the fastening bolts 22 extends from the base 4, through the attachment holes of the control unit 200 and are fastened in the structure 1. Thereby, the base 4 is pressed against the top of the control unit 200, and the control unit 200 is pressed against the structure 1. Thereby, thermal contact between the base 4 and the control unit 200 and between the control unit 200 and the structure 1 is enhanced, and thermal conductance between the base 4 and the control unit 200 and between the control unit 200 and the structure 1 is enhanced.

The robot may comprise a first electrical base connector 24 arranged at the base 4 of the robot 2. In some examples, the first electrical base connector 24 may be a power supply connector adapted to receive power for powering the robot 2. The robot may comprise a second electrical base connector 26 arranged at the base 4 of the robot 2. In some examples, the second electrical base connector 26 may be an I/O port. The control unit 200 may also comprise, as illustrated, an electrical control unit connector, which, for example, may be adapted to couple with a teach pendant connector of a teach pendant for controlling and/or programming the robot. It is noted that the connectors in the present example illustrated as being arranged at the base 4 of the robot may alternatively be provided in the control unit 200 and vice versa.

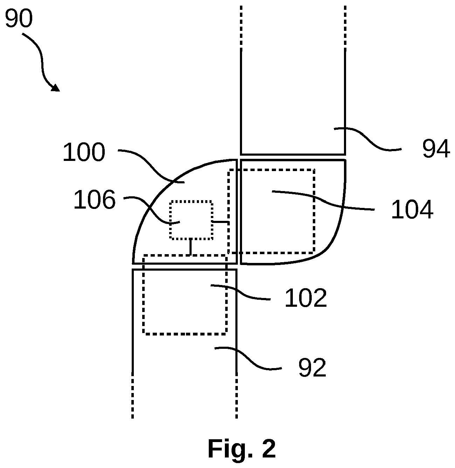

Fig. 2 is a schematic diagram illustrating an exemplary joint assembly 90, which may be any of the first, second, or third joint assemblies 8, 12, 16 as shown in Fig. 1.

The joint assembly 90 comprises a joint housing 100. The joint assembly 90 comprises a primary motor 102 connecting the joint housing 100 with a primary link 92 (e.g. the first link 6, the second link 10, or the third link 14 of Fig. 1). The primary motor 102 is adapted to rotate the primary link 92 relative to the joint housing 100 around a primary axis (e.g. the first axis Ax1, the third axis Ax3, the fifth axis Ax5, or the seventh axis Ax7 of Fig. 1). The illustrated joint assembly 90 comprises an optional secondary motor 104 connecting the joint housing 100 with a secondary link 94 (e.g. the second link 10, the third link 14, or the fourth link 18 of Fig. 1). The secondary motor 104 is adapted to rotate the secondary link 94 relative to the joint housing 100 around a secondary axis (e.g. the second axis Ax2, the fourth axis Ax4, or the sixth axis Ax6 of Fig. 1). The joint assembly 90 comprises circuitry 106, e.g. a first PCB, accommodated in the joint housing 100. The circuitry 106 is adapted to control the primary motor 102 and the secondary motor 104. The primary motor 102 and/or the secondary motor 104 may be a permanent magnet AC motor. Furthermore, the primary motor 102 and/or the secondary motor 104 may comprise a gear assembly, e.g. an integral gear, such as a strain wave gear. Hence, the primary motor 102 and/or the secondary motor 104 may be a gear motor.

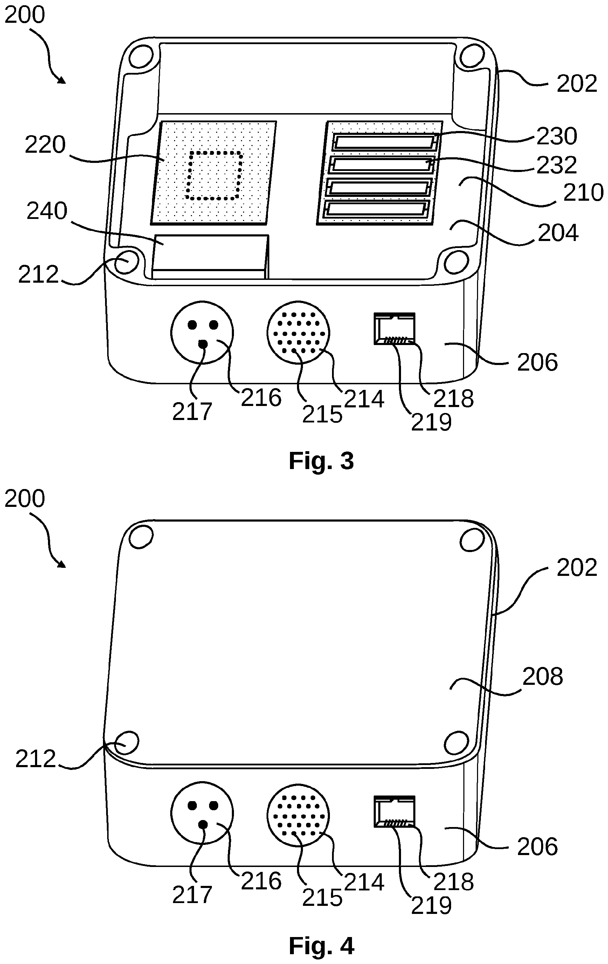

Figs. 3 and 4 schematically illustrates an exemplary control unit 200, as also mentioned in relation to Fig. 1. The control unit 200 is adapted to be arranged between a base of the robot and a structure to which the robot is to be fastened, as illustrated in Fig. 1.

The control unit housing 200 comprises a bottom plate 204 and a sidewall 206. The sidewall 206 may be one integrally formed sidewall or may be made up of a plurality of sidewall parts, e.g. four sidewall parts. The bottom plate 204 and the sidewall 206 forms a control unit housing 202. The control unit 200 and/or the control unit housing 202 may further comprise a top plate 208, as illustrated in Fig. 4. The bottom plate 204 is adapted to abut (e.g. contact) the structure to which the robot is to be fastened. The bottom plate and/or the sidewall forms an inner surface 210 of the control unit 200.

The control unit 200 may be adapted such as to facilitate transmission of heat from the robot, such as from the control unit 200, to the structure to which the robot is fastened. For example, the sidewall 206 and the bottom plate 204 may be integrally formed, e.g. may be cast in one piece and/or may be machined from a single block of material. Integrally forming the sidewall 206 and the bottom plate 204 may facilitate enhanced heat transmission between the sidewall 206 and bottom plate 204. Additionally or alternatively, the bottom plate 204 and/or the sidewall 206, and/or optionally the top plate 208, may be made of aluminium. Alternatively, other materials, such as copper, or alloys of different materials, e.g. comprising aluminium and/or copper, may be used for the control unit housing 202 or control unit housing parts. The material(s) used preferably has a high thermal conductivity, such as at least 100 W/(m·K).

The control unit 200 comprises a control circuit 220. The control circuit 220 may be a PCB. The control circuit 220 comprises a processing unit.

The control unit 200 may comprise an energy consumption unit 230. The energy consumption unit 230 may serve the purpose of handling excess power on a power bus of the robot and/or from motors of the robot, which may be generated in situations, where a motor of the robot is braking an ongoing motion. The energy consumption unit 230 may comprise one or more resistors 232, which may handle such excess power by converting it to heat. In the illustrated example, the energy consumption unit 230 comprises four resistors 232. In other examples, the energy consumption unit 230 may comprise one resistor 232 for each of the motors of the joint assemblies of the robot, i.e. seven resistors 232 for a seven-axis robot.

The control unit 200 may comprise a power supply unit 240. The power supply unit 240 may be adapted to power the robot, such as the electrical components of the robot. The power supply unit 240 may be connectable to an input power supply, such as a wall socket, e.g. supplying 230 V AC. In such example, the power supply unit 240 may be configured to convert the 230 V AC input to provide 12V, 24V and/or 48V DC to components of the robot. In other examples, the power supply unit 240 may be connectable to an external battery powered supply, e.g. supplying 48V DC. In such example, the power supply unit 240 may be configured to also provide 12V and/or 24V to some components of the robot. In some examples, the power supply unit 240 may comprise an internal battery.

The control unit 200 may comprise one or more electrical control unit connectors 214, 216, 218, e.g. including a first electrical control unit connector 214, a second electrical control unit connector 216, and/or a third electrical control unit connector 218. The electrical control unit connectors 214, 216, 218 may comprise a plurality of respective control unit terminals 215, 217, 219. The first electrical control unit connector 214 may comprise first control unit terminals 215. The second electrical control unit connector 216 may comprise second control unit terminals 217. The third electrical control unit connector 218 may comprise third control unit terminals 219.

The first electrical control unit connector 214 may be adapted to couple with a teach pendant connector of a teach pendant for controlling and/or programming the robot. The second electrical control unit connector 216 may be a power supply connector for connecting a power chord for receiving power for powering the robot. For example, the power supply connector may be coupled with the power supply unit 240. The third electrical control unit connector 218 may be an ethernet connector or a USB connector. One or more of the first, second or third electrical control unit connectors may be omitted, or additional electrical control unit connectors may be additionally included.

The first electrical control unit connector 214, the second electrical control unit connector 216, and/or the third electrical control unit connector 218 may be arranged through the sidewall 202, as illustrated. The electrical control unit connectors 214, 216, 218 may be arranged through the same face of the side wall 202 as illustrated. However, in other examples, the electrical control unit connectors 214, 216, 218 may be arranged through different faces of the side wall 202.

The control unit 200 may comprise attachment holes 212. The attachment holes allow fastening of the robot on top of the control unit 200, as well as fastening to the structure onto which the robot is to be fastened. For example, the attachment holes 212 may be through holes, allowing fastening bolts 22 (see fig. 1) to extend therethrough, to thereby fasten both the control unit 200 and the robot to the structure. Preferably, the fastening bolts 22 extends through the attachment holes 212 of the control unit 200 and are fastened to the structure 1, such that the base 4 of the robot 2 is pressed against the top of the control unit 200, and the control unit 200 is pressed against the structure 1.

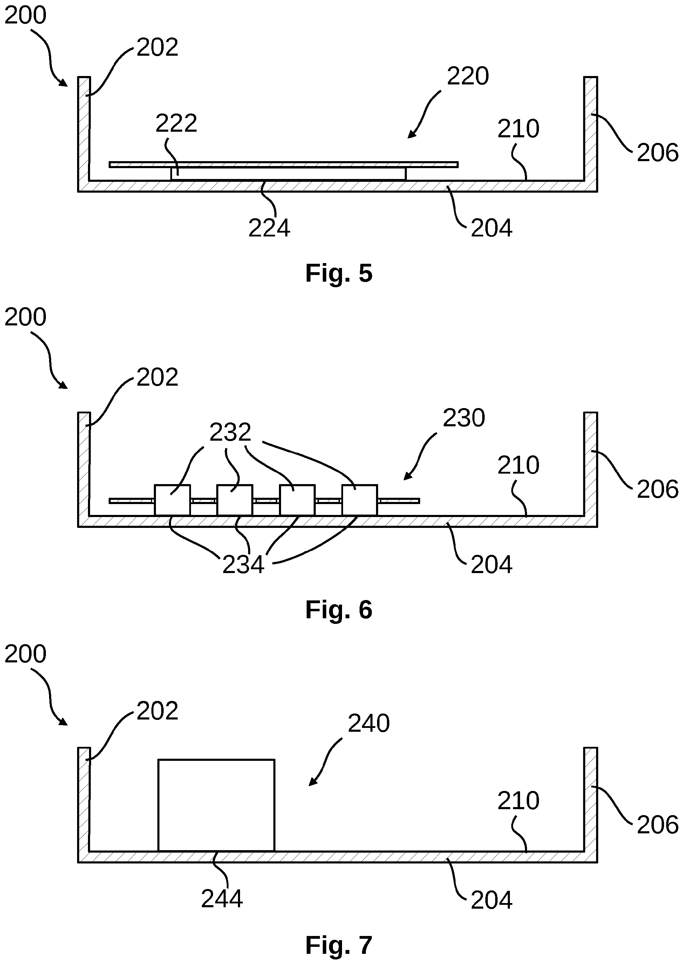

Fig. 5 schematically illustrates a simplified cross-section view of the exemplary control unit 200 comprising the control circuit 220. The control circuit 220 comprises a processing unit 222. The processing unit 222 may be adapted to control operation of the plurality of motors of the robot, e.g. to effectuate a desired movement of the robot. For example, the processing unit 222 may handle trajectory planning of the robot. The processing unit 222 may transmit instructions to, as well as receiving information from, individual processing units of each joint assembly, such as a processing unit of the circuitry 106 of Fig. 2

The processing unit 222 has a heat dissipating surface 224. The heat dissipating surface 224 of the processing unit 222 is abutting the inner surface 210 of the control unit 200. Thus, the control circuit 220 is arranged in the control unit housing 202 and with the heat dissipating surface 224 of the processing unit 222 abutting the inner surface 210. Thereby, heat generated by the processing unit 222, may be transferred to the control unit housing 202 of the control unit 200, and in turn to the structure to which the robot is fastened.

Fig. 6 schematically illustrates a simplified cross-section view of the exemplary control unit 200 comprising the energy consumption unit 230. The energy consumption unit may have one or more heat dissipating surface 234. The energy consumption unit 230 may, as mentioned earlier, comprise one or more resistors 232. These resistors 232 may generate significant amount of heat. The one or more heat dissipating surfaces 234 of the energy consumption unit 230 may be surfaces of the resistors 232. The heat dissipating surface(s) 234 of the energy consumption unit 230 is abutting the inner surface 210 of the control unit 200. Thus, the energy consumption unit 230 is arranged in the control unit housing 202 and with the heat dissipating surface(s) 234 of the energy consumption unit 230 abutting the inner surface 210. Thereby, heat generated by the energy consumption unit 230, for example, from the resistors 232 of the energy consumption unit 230, may be transferred to the control unit housing 202 of the control unit 200, and in turn to the structure to which the robot is fastened.

Fig. 7 schematically illustrates a simplified cross-section view of the exemplary control unit 200 comprising the power supply unit 240. The power supply unit 240 has a heat dissipating surface 240. The heat dissipating surface 244 of the power supply unit 240 is abutting the inner surface 210 of the control unit 200. Thus, the power supply unit 240 is arranged in the control unit housing 202 and with the heat dissipating surface 244 of the power supply unit 240 abutting the inner surface 210. Thereby, heat generated by the power supply unit 240, may be transferred to the control unit housing 202 of the control unit 200, and in turn to the structure to which the robot is fastened.

In the examples of Figs. 5-7, the heat dissipating surfaces 224, 234, 244 are abutting the bottom plate 204. However, in other examples one or more of the heat dissipating surfaces 224, 234, 244 may abut the side wall 206.

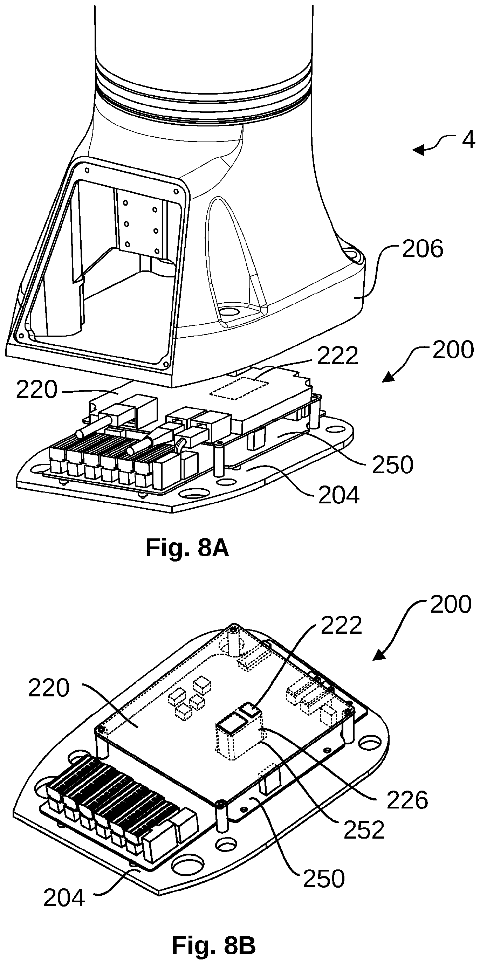

Figs. 8A and 8B schematically illustrates an exemplary control unit 200 adapted to be arranged between the base 4 of the robot and a structure to which the robot is to be fastened, as illustrated in Fig. 1. In the example of Figs. 8A and 8B, the sidewall 206 is formed by the base 4 of the robot.

Furthermore, the heat dissipating surface of the processing unit 222 is abutting the inner surface via a heat transferring element 226. The heat transferring element 226. The heat transferring element 226 may be made of the same material as the bottom plate 204 and/or may form an integral part of the bottom plate 204.

In the illustrated example, the control unit 200 further comprises an I/O board 250 positioned between the control circuit 220 comprising the processing unit 222 and the bottom plate 204. The I/O board comprises an opening 252 for the heat transferring element 226 to extend therethrough. The disclosure has been described with reference to a preferred embodiment. However, the scope of the invention is not limited to the illustrated embodiment, and alterations and modifications can be carried out without deviating from the scope of the invention as defined in the claims.

Throughout the present disclosure, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### LIST OF REFERENCES

- 1: structure
- 2: robot
- 4: base
- 6: first link
- 8: first joint assembly
- 10: second link
- 12: second joint assembly
- 14: third link
- 16: third joint assembly
- 18: fourth link
- 20: fourth joint assembly
- 22: fastening bolts
- 24: first electrical base connector
- 26: second electrical base connector
- 90: joint assembly
- 92: primary link
- 94: secondary link
- 100: joint housing
- 102: primary motor
- 104: secondary motor
- 106: circuitry

- 200: control unit
- 202: control unit housing
- 204: bottom plate
- 206: side wall
- 208: top plate
- 210: inner surface
- 212: attachment holes
- 214: first electrical control unit connector
- 215: first control unit terminals
- 216: second electrical control unit connector
- 217: second control unit terminals
- 218: third electrical control unit connector
- 219: third control unit terminals
- 220: control circuit
- 222: processing unit
- 224: heat dissipating surface
- 226: heat transferring element
- 230: energy consumption unit
- 232: resistor
- 234: heat dissipating surface
- 240: power supply unit
- 244: heat dissipating surface
- 250: I/O board
- 252: opening

- Ax1: first axis
- Ax2: second axis
- Ax3: third axis
- Ax4: fourth axis
- Ax5: fifth axis
- Ax6: sixth axis
- Ax7: seventh axis

## Claims

1. A control unit (200) for a robot (2), the control unit (200) being adapted to be arranged between a base (4) of the robot (2) and a structure (1) to which the robot is to be fastened, the control unit (200) comprising:
- a bottom plate (204) and an optional sidewall (206), wherein the bottom plate (204) is adapted to abut the structure (1), the bottom plate (204) and optionally the sidewall (206) forming an inner surface (210) of the control unit (200),
- a control circuit (220) comprising a processing unit (222) having a heat dissipating surface (224),
**characterized in that**
the control circuit (220) is arranged with the heat dissipating surface (224) of the processing unit (222) abutting the inner surface (210) of the control unit (200).

2. Control unit (200) according to claim 1, wherein the control unit (200) comprises the sidewall (206) and a control unit housing (202) comprising the bottom plate (204) and the sidewall (206).

3. Control unit (200) according to any of the preceding claims, wherein the control unit (200) comprises the sidewall (206), and wherein the sidewall (206) is integrally formed with the bottom plate (204).

4. Control unit (200) according to any of the preceding claims, wherein the bottom plate (204) is made of aluminium.

5. Control unit (200) according to any of the preceding claims, wherein the bottom plate (204) is made of a material with a thermal conductivity at room temperature of at least 100 W/(m·K), such as at least 200 W/(m·K).

6. Control unit (200) according to any of the preceding claims comprising an energy consumption unit (230), wherein the energy consumption unit (230) is arranged with a heat dissipating surface (234) of the energy consumption unit (230) abutting the inner surface (210) of the control unit (200).

7. Control unit according to any of the preceding claims comprising a power supply unit, wherein the power supply unit (240) is arranged with a heat dissipating surface (244) of the power supply unit (240) abutting the inner surface (210) of the control unit (200).

8. Control unit (200) according to any of the preceding claims comprising the side wall and a first electrical control unit connector (214), wherein the first electrical control unit connector (214) is arranged through the sidewall (206), optionally wherein the first electrical control unit connector (214) is adapted to couple with a teach pendant connector of a teach pendant for controlling and/or programming the robot.

9. Control unit (200) according to any of the preceding claims comprising the side wall and a second electrical control unit connector (216), wherein the second electrical control unit connector (216) is arranged through the sidewall (206), optionally wherein the second electrical control unit connector (216) is an ethernet connector or a USB connector.

10. Control unit (200) according to any of the preceding claims, wherein the heat dissipating surface (224) of the processing unit (222) is abutting the inner surface (210) via a heat transferring element (226), optionally comprising the sidewall (206) wherein the heat transferring element (226) is an integral part of the bottom plate (204) and/or the sidewall (206).

11. A robot (2) comprising a plurality of joint assemblies (8, 12, 16, 20, 90) including a first joint assembly (8, 90) and a second joint assembly (12, 90), the robot (2) further comprises a plurality of motors (102, 104) including a first primary motor (102) and a second primary motor (102),
the first joint assembly (8, 90) comprising a first joint housing (100) and the first primary motor (102) connecting the first joint housing (100) with a first primary link (92), the first primary motor (102) being adapted to rotate the first primary link (92) relative to the first joint housing (100) around a first primary axis (Ax1),
the second joint assembly (12, 90) comprising a second joint housing (100) and the second primary motor (102) connecting the second joint housing (100) with a second primary link (92), the second primary motor (102) being adapted to rotate the second primary link (92) relative to the second joint housing (100) around a second primary axis (Ax2),
the robot (2) comprising a control unit (200) according to any of the preceding claims arranged below a base (4) of the robot (2), such as to be positioned between the base (4) of the robot (2) and a structure (1) to which the robot is to be fastened.

12. Robot (2) according to claim 11, wherein the processing unit (222) is adapted to control operation of the plurality of motors (102) to effectuate a desired movement of the robot (2).

13. Robot (2) according to any of claims 11-12, wherein the first primary link (92) extends between the base (4) of the robot (2) and the first joint assembly (8, 90) and/or wherein the second primary link (92) extends between the first joint assembly (8, 90) and the second joint assembly (12, 90).

14. Robot (2) according to any of claims 11-13 comprising a first electrical base connector (24), wherein the first electrical base connector (24) is arranged at the base (4) of the robot (2), optionally wherein the first electrical base connector (24) is a power supply connector adapted to receive power for powering the robot (2).

15. Robot (2) according to any of claims 11-14 comprising a second electrical base connector, wherein the second electrical base connector (26) is arranged at the base of the robot (2), optionally wherein the second electrical base connector (26) is an I/O port.

## Patentansprüche

1. Steuereinheit (200) für einen Roboter (2), wobei die Steuereinheit (200) dazu ausgelegt ist, zwischen einer Basis (4) des Roboters (2) und einer Struktur (1), an der der Roboter befestigt werden soll, angeordnet zu werden, wobei die Steuereinheit (200) Folgendes umfasst:
- eine Bodenplatte (204) und eine optionale Seitenwand (206), wobei die Bodenplatte (204) dazu ausgelegt ist, um an der Struktur (1) anzuliegen, wobei die Bodenplatte (204) und optional die Seitenwand (206) eine Innenfläche (210) der Steuereinheit (200) bilden,
- eine Steuerschaltung (220), die eine Verarbeitungseinheit (222) mit einer wärmeableitenden Fläche (224) umfasst,
**dadurch gekennzeichnet, dass**
die Steuerschaltung (220) so angeordnet ist, dass die wärmeableitende Fläche (224) der Verarbeitungseinheit (222) an der Innenfläche (210) der Steuereinheit (200) anliegt.

2. Steuereinheit (200) nach Anspruch 1, wobei die Steuereinheit (200) die Seitenwand (206) und ein die Bodenplatte (204) und die Seitenwand (206) umfassendes Steuereinheitsgehäuse (202) umfasst.

3. Steuereinheit (200) nach einem der vorstehenden Ansprüche, wobei die Steuereinheit (200) die Seitenwand (206) umfasst und wobei die Seitenwand (206) einstückig mit der Bodenplatte (204) ausgebildet ist.

4. Steuereinheit (200) nach einem der vorstehenden Ansprüche, wobei die Bodenplatte (204) aus Aluminium hergestellt ist.

5. Steuereinheit (200) nach einem der vorstehenden Ansprüche, wobei die Bodenplatte (204) aus einem Material mit einer Wärmeleitfähigkeit bei Raumtemperatur von mindestens 100 W/(m·K), wie z.B. mindestens 200 W/(m·K), hergestellt ist.

6. Steuereinheit (200) nach einem der vorstehenden Ansprüche, umfassend eine Energieverbrauchseinheit (230), wobei die Energieverbrauchseinheit (230) so angeordnet ist, dass eine wärmeableitende Fläche (234) der Energieverbrauchseinheit (230) an der Innenfläche (210) der Steuereinheit (200) anliegt.

7. Steuereinheit nach einem der vorstehenden Ansprüche, umfassend eine Stromversorgungseinheit, wobei die Stromversorgungseinheit (240) so angeordnet ist, dass eine wärmeableitende Fläche (244) der Stromversorgungseinheit (240) an der Innenfläche (210) der Steuereinheit (200) anliegt.

8. Steuereinheit (200) nach einem der vorstehenden Ansprüche, umfassend die Seitenwand und einen ersten elektrischen Steuereinheitsanschluss (214), wobei der erste elektrische Steuereinheitsanschluss (214) durch die Seitenwand (206) hindurch angeordnet ist, optional wobei der erste elektrische Steuereinheitsanschluss (214) dazu ausgelegt ist, mit einem Teach-Pendant-Anschluss eines Teach-Pendants zur Steuerung und/oder Programmierung des Roboters gekoppelt zu werden.

9. Steuereinheit (200) nach einem der vorstehenden Ansprüche, umfassend die Seitenwand und einen zweiten elektrischen Steuereinheitsanschluss (216), wobei der zweite elektrische Steuereinheitsanschluss (216) durch die Seitenwand (206) hindurch angeordnet ist, optional wobei der zweite elektrische Steuereinheitsanschluss (216) ein Ethernet-Anschluss oder ein USB-Anschluss ist.

10. Steuereinheit (200) nach einem der vorstehenden Ansprüche, wobei die wärmeableitende Fläche (224) der Verarbeitungseinheit (222) über ein Wärmeübertragungselement (226), das optional die Seitenwand (206) umfasst, an der Innenfläche (210) anliegt, wobei das Wärmeübertragungselement (226) ein integraler Bestandteil der Bodenplatte (204) und/oder der Seitenwand (206) ist.

11. Roboter (2), umfassend eine Vielzahl von Gelenkbaugruppen (8, 12, 16, 20, 90) einschließlich einer ersten Gelenkbaugruppe (8, 90) und einer zweiten Gelenkbaugruppe (12, 90), wobei der Roboter (2) weiter eine Vielzahl von Motoren (102, 104) umfasst, einschließlich eines ersten Primärmotors (102) und eines zweiten Primärmotors (102),
wobei die erste Gelenkbaugruppe (8, 90) ein erstes Gelenkgehäuse (100) und den ersten Primärmotor (102) umfasst, der das erste Gelenkgehäuse (100) mit einem ersten primären Verbindungsglied (92) verbindet, wobei der erste Primärmotor (102) dazu ausgelegt ist, das erste primäre Verbindungsglied (92) relativ zum ersten Gelenkgehäuse (100) um eine erste Primärachse (Ax1) zu drehen,
wobei die zweite Gelenkbaugruppe (12, 90) ein zweites Gelenkgehäuse (100) und den zweiten Primärmotor (102) umfasst, der das zweite Gelenkgehäuse (100) mit einem zweiten primären Verbindungsglied (92) verbindet, wobei der zweite Primärmotor (102) dazu ausgelegt ist, das zweite primäre Verbindungsglied (92) relativ zu dem zweiten Gelenkgehäuse (100) um eine zweite Primärachse (Ax2) zu drehen,
wobei der Roboter (2) eine Steuereinheit (200) nach einem der vorstehenden Ansprüche umfasst, die unterhalb einer Basis (4) des Roboters (2) angeordnet ist, so dass sie zwischen der Basis (4) des Roboters (2) und einer Struktur (1), an der der Roboter befestigt werden soll, positioniert ist.

12. Roboter (2) nach Anspruch 11, wobei die Verarbeitungseinheit (222) dazu ausgelegt ist, den Betrieb der Vielzahl von Motoren (102) zu steuern, um eine gewünschte Bewegung des Roboters (2) zu bewirken.

13. Roboter (2) nach einem der Ansprüche 11-12, wobei sich das erste primäre Verbindungsglied (92) zwischen der Basis (4) des Roboters (2) und der ersten Gelenkbaugruppe (8, 90) erstreckt und/oder wobei sich das zweite primäre Verbindungsglied (92) zwischen der ersten Gelenkbaugruppe (8, 90) und der zweiten Gelenkbaugruppe (12, 90) erstreckt.

14. Roboter (2) nach einem der Ansprüche 11-13, umfassend einen ersten elektrischen Basisanschluss (24), wobei der erste elektrische Basisanschluss (24) an der Basis (4) des Roboters (2) angeordnet ist, optional wobei der erste elektrische Basisanschluss (24) ein Stromversorgungsanschluss ist, der dazu ausgelegt ist, Strom für die Stromversorgung des Roboters (2) aufzunehmen.

15. Roboter (2) nach einem der Ansprüche 11-14, umfassend einen zweiten elektrischen Basisanschluss, wobei der zweite elektrische Basisanschluss (26) an der Basis des Roboters (2) angeordnet ist, wobei optional der zweite elektrische Basisanschluss (26) ein E/A-Anschluss ist.

## Revendications

1. Unité de commande (200) pour un robot (2), l'unité de commande (200) étant adaptée pour être agencée entre une base (4) du robot (2) et une structure (1) à laquelle le robot doit être fixé, l'unité de commande (200) comprenant :
- une plaque inférieure (204) et une paroi latérale (206) facultative, dans laquelle la plaque inférieure (204) est adaptée pour venir en butée contre la structure (1), la plaque inférieure (204) et facultativement la paroi latérale (206) formant une surface interne (210) de l'unité de commande (200),
- un circuit (220) de commande comprenant une unité de traitement (222) présentant une surface de dissipation de chaleur (224),
**caractérisée en ce que** le circuit (220) de commande est agencé avec la surface de dissipation de chaleur (224) de l'unité de traitement (222) venant en butée contre la surface interne (210) de l'unité de commande (200).

2. Unité de commande (200) selon la revendication 1, dans laquelle l'unité de commande (200) comprend la paroi latérale (206) et un boîtier d'unité de commande (202) comprenant la plaque inférieure (204) et la paroi latérale (206).

3. Unité de commande (200) selon l'une quelconque des revendications précédentes, dans laquelle l'unité de commande (200) comprend la paroi latérale (206), et dans laquelle la paroi latérale (206) est formée d'une seule pièce avec la plaque inférieure (204).

4. Unité de commande (200) selon l'une quelconque des revendications précédentes, dans laquelle la plaque inférieure (204) est constituée d'aluminium.

5. Unité de commande (200) selon l'une quelconque des revendications précédentes, dans laquelle la plaque inférieure (204) est constituée d'un matériau avec une conductivité thermique à température ambiante d'au moins 100 W/(m·K), telle qu'au moins 200 W/(m K).

6. Unité de commande (200) selon l'une quelconque des revendications précédentes comprenant une unité de consommation d'énergie (230), dans laquelle l'unité de consommation d'énergie (230) est agencée avec une surface de dissipation de chaleur (234) de l'unité de consommation d'énergie (230) venant en butée contre la surface interne (210) de l'unité de commande (200).

7. Unité de commande selon l'une quelconque des revendications précédentes comprenant une unité d'alimentation électrique, dans laquelle l'unité d'alimentation électrique (240) est agencée avec une surface de dissipation de chaleur (244) de l'unité d'alimentation électrique (240) venant en butée contre la surface interne (210) de l'unité de commande (200).

8. Unité de commande (200) selon l'une quelconque des revendications précédentes comprenant la paroi latérale et un premier connecteur d'unité de commande électrique (214), dans laquelle le premier connecteur d'unité de commande électrique (214) est agencé à travers la paroi latérale (206), facultativement dans laquelle le premier connecteur d'unité de commande électrique (214) est adapté pour être couplé à un connecteur de pendant d'apprentissage d'un pendant d'apprentissage pour commander et/ou programmer le robot.

9. Unité de commande (200) selon l'une quelconque des revendications précédentes comprenant la paroi latérale et un second connecteur d'unité de commande électrique (216), dans laquelle le second connecteur d'unité de commande électrique (216) est agencé à travers la paroi latérale (206), facultativement dans laquelle le second connecteur d'unité de commande électrique (216) est un connecteur Ethernet ou un connecteur USB.

10. Unité de commande (200) selon l'une quelconque des revendications précédentes, dans laquelle la surface de dissipation de chaleur (224) de l'unité de traitement (222) vient en butée contre la surface interne (210) par l'intermédiaire d'un élément (226) de transfert de chaleur, facultativement, comprenant la paroi latérale (206) dans laquelle l'élément (226) de transfert de chaleur fait partie intégrante de la plaque inférieure (204) et/ou de la paroi latérale (206).

11. Robot (2) comprenant une pluralité d'ensembles d'articulation (8, 12, 16, 20, 90) incluant un premier ensemble d'articulation (8, 90) et un second ensemble d'articulation (12, 90), le robot (2) comprenant en outre une pluralité de moteurs (102, 104) incluant un premier moteur (102) primaire et un second moteur (102) primaire,
le premier ensemble d'articulation (8, 90) comprenant un premier boîtier d'articulation (100) et le premier moteur (102) primaire reliant le premier boîtier d'articulation (100) à une première liaison (92) primaire, le premier moteur (102) primaire étant adapté pour faire tourner la première liaison (92) primaire par rapport au premier boîtier d'articulation (100) autour d'un premier axe primaire (Ax1),
le second ensemble d'articulation (12, 90) comprenant un second boîtier d'articulation (100) et le second moteur (102) primaire reliant le second boîtier d'articulation (100) à une seconde liaison (92) primaire, le second moteur (102) primaire étant adapté pour faire tourner la seconde liaison (92) primaire par rapport au second boîtier d'articulation (100) autour d'un second axe primaire (Ax2),
le robot (2) comprenant une unité de commande (200) selon l'une quelconque des revendications précédentes agencée sous une base (4) du robot (2), de manière à être positionnée entre la base (4) du robot (2) et une structure (1) à laquelle le robot doit être fixé.

12. Robot (2) selon la revendication 11, dans lequel l'unité de traitement (222) est adaptée pour commander un fonctionnement de la pluralité de moteurs (102) pour effectuer un mouvement souhaité du robot (2).

13. Robot (2) selon l'une quelconque des revendications 11 à 12, dans lequel la première liaison (92) primaire s'étend entre la base (4) du robot (2) et le premier ensemble d'articulation (8, 90) et/ou dans lequel la seconde liaison primaire (92) s'étend entre le premier ensemble d'articulation (8, 90) et le second ensemble d'articulation (12, 90).

14. Robot (2) selon l'une quelconque des revendications 11 à 13 comprenant un premier connecteur de base électrique (24), dans lequel le premier connecteur de base électrique (24) est agencé au niveau de la base (4) du robot (2), facultativement dans lequel le premier connecteur de base électrique (24) est un connecteur d'alimentation électrique adapté pour recevoir de l'électricité pour alimenter le robot (2).

15. Robot (2) selon l'une quelconque des revendications 11 à 14 comprenant un second connecteur de base électrique, dans lequel le second connecteur de base électrique (26) est agencé au niveau de la base du robot (2), facultativement dans lequel le second connecteur de base électrique (26) est un port I/O.
